# EUROPÄISCHE PATENTSCHRIFT

(11) **EP 1 725 815 B1**
(45) Veröffentlichungstag und Bekanntmachung des Hinweises auf die Patenterteilung: **27.07.2011**
(21) Anmeldenummer: 05714697.9
(22) Anmeldetag: 15.03.2005
(51) Int. Cl.: F24J 2/05

(54) **WÄRMETAUSCHER MIT VAKUUMRÖHRE**
HEAT EXCHANGER HAVING A VACUUM TUBE
ECHANGEUR THERMIQUE COMPRENANT UN TUBE A VIDE

(30) Priorität: 15.03.2004 WO PCT/CH2004/000152
(43) Veröffentlichungstag der Anmeldung: 29.11.2006
(73) Patentinhaber: Üstün, Orhan, 8180 Bülach (CH)
(72) Erfinder: Üstün, Orhan, 8180 Bülach (CH)
(74) Vertreter: Liebetanz, Michael
(86) Internationale Anmeldenummer: PCT/CH2005/000155
(87) Internationale Veröffentlichungsnummer: WO 2005/088208

(56) Entgegenhaltungen:
- DE-A1- 19 859 658
- DE-A1- 19 859 658
- FR-A- 2 444 238
- GB-A- 2 018 973
- GB-A- 2 018 973
- GB-A- 2 032 095
- GB-A- 2 032 095
- US-A- 4 186 724
- US-A- 4 259 946
- US-A- 4 440 156
- US-A- 4 653 471
- US-A- 4 653 471

## Beschreibung

### Stand der Technik

Die Erfindung betrifft einen Wärmetauscher mit einer Vakuumröhre mit einer Aussenwand, mit einer Fluid aufnehmenden Innenröhre, deren Aussenwand konzentrisch zu der Aussenwand der Vakuumröhre angeordnet ist mit den Merkmalen des Oberbegriffs des Anspruchs 1.

Der Wärmetauscher mit Vakuumröhre ist heute in der solaren Heiztechnik die wichtigste Komponente für die Umwandlung der Solarenergie in Wärmeenergie.

Ein Wärmetauscher mit den Merkmalen des Oberbegriffs des Anspruchs 1 ist aus der US 4,440,156 bekannt, wobei mindestens zwei Wärmeleitelemente die besagte Aussenwand der Vakuumröhre mit dem fluidführenden Rohrsystem verbinden, wobei an der besagten Wand auf der den Wärmeleitelementen abgewandten Seite der Vakuumröhre eine Folie als Solarenergie sammelndes und konzentrierendes Mittel vorgesehen ist, und wobei jedes Wärmeleitelement jeweils unter Vorspannung gegen die besagte Wand der Vakuumröhre und gegen das fluidführende Rohrsystem drückt.

Aus der DE 198 59 658 ist ein weiterer Wärmetauscher mit einer Vakuumröhre bekannt, bei der eine Fluid aufnehmende Innenröhre von einer Aussenröhre umgeben ist, in der ein Sorbens eingeleitet ist. In diesem Sorbensraum sind Leitflügel als Wärmeleitelemente vorgesehen. Der Absorber als ein Solarenergie sammelndes und konzentrierendes Mittel ist auf diesen Leitflügeln in der Aussenröhre aufgebracht, so dass ein Wärmeübertrag auf das Sorbens und dann über die Wand der Innenröhre auf das innenfliessende Fluid geschieht. Diese Einheit insgesamt ist von einer Vakuumröhre umgeben. Die Leitflügel dienen zur Verteilung des Sorbens und sollen über Stege an Ort und Stelle gehalten werden.

Die US 4,653,471 zeigt ein inneres Rohr für ein Wärme übertragendes Medium und von diesem Rohr radial ausgehende Wärmeleitelemente. Das innere Rohr ist über Befestigungsanschlüsse mechanisch mit einem Sammler verbunden, der sich in einem Gehäuse befindet, welches mit Isoliermaterial gefüllt ist und die Wände der Vakuumröhre hält.

Ein solcher Wärmetauscher ist beispielsweise aus der US 4,186,724 bekannt. Die Innenröhre zur Aufnahme des Fluids besteht aus zwei konzentrischen Röhren, in denen das Fluid im Gegenstrombetrieb fliessen kann. Diese Innenröhre ist von einem Isolationsraum umgeben, der fluidfern von der Innenwand der Vakuumröhre begrenzt ist. Die Innenwand und die Aussenwand der Vakuumröhre sind konzentrisch angeordnet und bilden im Querschnitt einen unter Unterdruck stehenden Ring um die Innenröhre.

Aus der US 4,307,712 ist ein weiterer solcher Wärmetauscher bekannt, bei dem die Innenröhre - möglichst einstückig - mit QuerRippen zum besseren Wärmeübertrag verbunden ist.

Bei den bekannten Wärmetauschern werden verschiedene Reflektionsoberflächen eingelegt oder verschiedene Elemente werden geschwärzt. Die Rohre des fluidführenden Systems sind üblicherweise aus einem gut wärmeleitenden Material. Es sind aber keine Elemente bekannt, die für einen guten Wärmeübertrag von solchen Reflektionsoberflächen auf das fluidführende Rohrsystem vorgesehen sind. Die aus der US 4,307,712 bekannten Rippen sind aufwendig mit dem fluidführenden Rohrsystem verbunden und haben keine Verbindung zu den Unterdruckröhren.

### Zusammenfassung der Erfindung

Ausgehend von diesem Stand der Technik liegt der Erfindung die Aufgabe zugrunde, einen Wärmetauscher der eingangs genannten Art so auszugestalten, dass sich der Wärmeübertrag auf das fluidführende System erhöht.

Negative Alterungserscheinungen können auf Grund von Oxidationseffekten, beispielsweise wegen der Verwendung unterschiedlicher (zum Beispiel Metall-) Materialien bei den einzelnen Röhrensystemen, oder Kondensationserscheinungen entstehen.

Diese Aufgabe wird erfindungsgemäss mit den Merkmalen des Anspruchs 1 gelöst.

Ein erfindungsgemässer Wärmetauscher verfügt über eine Vakuumröhre mit einer Aussenwand. In eine Innenröhre des Wärmetauschers ist ein wärmeleitendes Fluid einfüllbar. Die Aussenwand der Innenröhre ist konzentrisch zu einer Wand der Vakuumröhre angeordnet. Dabei ist mindestens eine Wärmeleitfolie vorgesehen, die die besagte Wand der Vakuumröhre mit dem fluidführenden Rohrsystem verbindet. Dieses mindestens eine Wärmeleitelement drückt jeweils unter Vorspannung gegen die besagte Wand der Vakuumröhre und gegen das fluidführende Rohrsystem.

Unter dem Begriff Vakuumröhre wird ein längliches Volumensystem verstanden, welches im Betriebszustand unter Unterdruck setzbar ist. Die Röhren können insbesondere auch eckig oder polygonal sein.

Dadurch, dass eine im Querschnitt spiralförmig verlaufende gut wärmeleitende Folie den äusseren Vakuumraum, an dem insbesondere das Solarenergie sammelnde und konzentrierende Mittel vorgesehen ist, mit dem fluidführenden Rohrsystem verbindet, wird eine überraschend einfache Ausführungsform angegeben.

Weitere vorteilhafte Ausgestaltungen sind in den Unteransprüchen gekennzeichnet.

### Kurze Beschreibung der Zeichnungen

Die Erfindung wird nun unter Bezugnahme auf die beigefügten Zeichnungen an Hand von einem Ausführungsbeispiel beispielhaft näher beschrieben. Es zeigen:
- Fig. 1: einen Querschnitt durch einen Wärmetauscher nach einem Ausführungsbeispiel der Erfindung,
- Fig. 2: einen Längsschnitt entlang der Linie II-II in der Fig. 1,
- Fig. 3: eine schematische Darstellung von mehreren Wärmetau- schern nach der Erfindung,
- Fig. 4: einen Querschnitt durch einen Wärmetauscher, nicht nach einem Ausführungsbeispiel der Erfindung,
- Fig. 5: einen Querschnitt durch einen Wärmetauscher, nicht nach einem Ausführungsbeispiel der Erfindung, und
- Fig. 6: einen teilweisen Längsschnitt und Seitenansicht auf den Wärmetauscher nach Fig. 5.

### Ausführliche Beschreibung von Ausführungsbeispielen

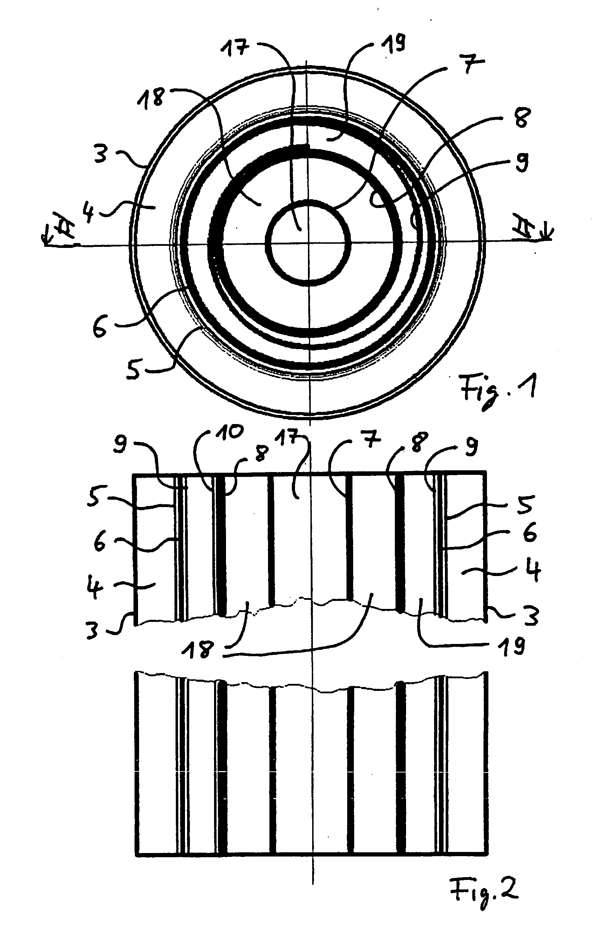

Die Fig. 1 zeigt einen Querschnitt durch einen Wärmetauscher nach einem Ausführungsbeispiel der Erfindung. Der Wärmetauscher umfasst eine Vakuumröhre, die aus zwei ineinander geschobenen Glasröhren 3 und 6 besteht, deren Enden wie bei einer Thermoskanne an einer Seite miteinander verschmolzen sein können. Die Glasröhren 3 und 6 sind jeweils als Kreise aus einem doppelten Strich dargestellt. Im Spalt 4 zwischen den konzentrisch zueinander verlaufenden Glasröhren 3 und 6 herrscht permanent ein Unterdruck, insbesondere beträgt der Druck vorteilhafterweise weniger als 0.1 Pa oder anders ausgedrückt 0.1 Mikrobar. Der Unterdruck im Spalt 4 verhindert insbesondere, dass beispielsweise von der Sonne absorbierte Wärme durch Konvektion nach aussen wieder abgegeben wird.

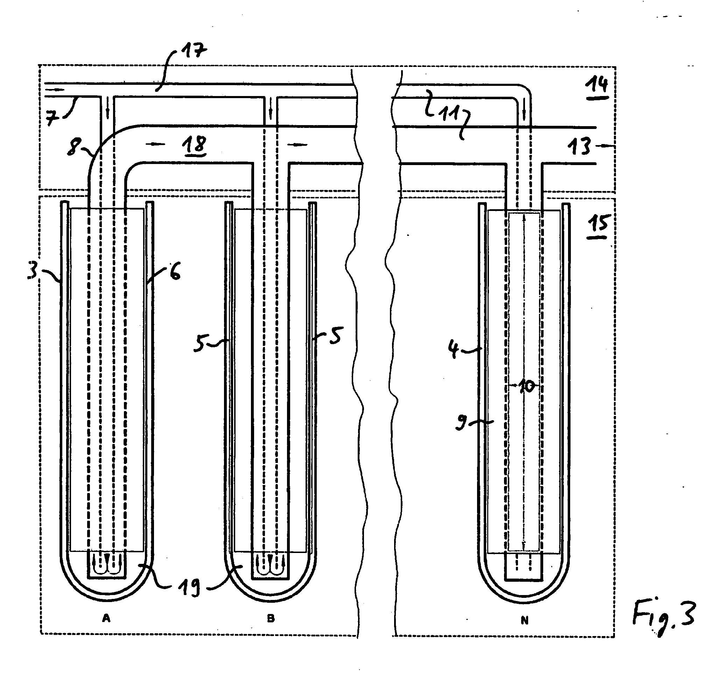

Der Solarkollektor besteht zumeist aus einer Vielzahl von parallel und/oder serielle angeordneten Wärmetauschern, dem in der Fig. 3 dargestellten Verteiler/Sammler 11 und dem Trägerrahmen 15 mit dem externen Reflektor (in den Zeichnungen nicht dargestellt). Der Wärmetauscher umfasst beim hier dargestellten Ausführungsbeispiel ein Vorlaufrohr 7, ein Rücklaufrohr 8 und das spiralförmige Wärmeleitblech 9. Das Wärmeleitblech 9 ist, wie aus der Fig. 3 zu erkennen ist, mit dem Rücklaufrohr 8 im Bereich 10 fest verbunden. In dem "N."-ten Solarkollektor der Fig. 3 ist das Wärmeleitblech 9 in einem Befestigungsbereich 10 auf dem Rücklaufrohr 8 zu sehen.

Das Vorlaufrohr 7 mit dem zentrischen Volumen 17 führt ein relativ kälteres Wärmeträgerfluid. Das Rücklaufrohr 8, das mit dem Sammler/Verteiler 11 durchgehend verbunden ist, führt erwärmtes Wärmeträgerfluid in dem im Querschnitt ringförmigen Volumen 18. Der Verteiler/Sammler 11 verteilt und verbindet mehrere Stränge von Vorlaufrohren 7 und Rücklaufrohren 8 mit den dazu gehörenden Wärmeleitblechen 9 und Vakuumröhren 3 und 6 hydraulisch nach "Tichelmann". Die prinzipiellen Temperaturverläufe in den FluidVolumina 17 und 18, das heisst aussen wärmer innen kälter und/oder Gegenstrom-Betrieb können auch umgekehrt eingestellt werden, das heisst aussen kälter und/oder Gleichstrom-Betrieb. Am Kollektorausgang 13 verlässt dann das aus den N Kollektoren gesammelte Fluidvolumina das Sammlergehäuse 14 mit der Isolation, nachdem es einzeln aus den Trägerrahmen 15 mit den Reflektoren zusammengeführt worden ist.

Auf der ganzen Oberfläche des inneren Vakuumrohres 6 ist ein Absorber 5 aufgetragen, beispielsweise als eine metallisch aufgetragene Schicht. Bei einem sehr guten Vakuum wie den oben genannten Drücken im Mikrobarbereich entstehen Stagnationstemperaturen von mehr als 340 Grad Celsius. Dann kann es sich bei dem Absorber insbesondere um plasmatechnisch aufgetragene Metalloxidschichten handeln. Bei geringerem Vakuum, wo auch nur tiefere Temperaturen am Absorber 5 auftreten, kann es sich beispielsweise um aluminiumbeschichtetes Papier, aluminisierte Polyestermaterialien wie das von Dupont unter dem Handelsnamen erhältliche "Mylar" oder andere Absorbermaterialien 5 handeln, die in diesem Unterdruckbereich (Vakuum) des Spaltes 4 angeordnet sind. Die dort absorbierte beispielsweise solare Wärmeenergie wird durch das Glas des inneren Rohres 6 auf das spiralförmige Wärmeleitblech 9 übertragen. Diese Absorberschicht 5 kann auch auf der Innenseite des Rohres 6 aufgetragen und/oder im spiralförmigen Wärmeleitblech integriert sein.

Das Wärmeleitblech 9 ist ein rechteckiges Blech, das vorzugsweise im Bereich 10 auf dem Rohr 8 befestigt ist, beispielsweise hartverlötet ist. Es wird dann unter Vorspannung um das Rohr 8 herumgerollt, um zusammen in das Doppelrohr 3, 6 der Vakuumröhre hineingeschoben zu werden und den Zwischenraum 19 zu füllen. Durch die Vorspannung des Bleches drückt dieses gegen die Innenwand des Rohrs 6 und liegt über einen gewissen Bereich, beispielsweise 90 Grad oder ein Viertelkreis, auf dieser Innenwand auf. Dieser Bereich kann kleiner, insbesondere aber auch grösser gewählt werden.

Vorteilhafterweise, und um die unerwünschten Kondensatbildung zu vermeiden, liegt das Blech 9 über einen möglichst grossen Winkelbereich an der inneren Glasoberfläche an, beispielsweise über mehr als 355 Grad, vorzugsweise fast 360 Grad, beispielsweise 359 Grad.

Das somit im Querschnitt spiralförmige Wärmeleitblech 9 wird durch eigene Federkraft flächendeckend und fest auf die ganze Glasfläche des Rohres 6 gedrückt, so dass eine optimale Wärmeübertragung erreicht wird.

Die Erfindung ermöglicht mit dieser Lösung nicht nur eine ideale Wärmeleitung, sondern verhindert auch mit der homogenen Flächenpressung an die Innenseite des Vakuuminnenrohres 6 Kältebrücken und vor allem sehr weitgehend die Kondenswasserbildung, die bei Systemen nach dem Stand der Technik starke Oxidationsschichten verursachen, was wiederum eine Leistungsverminderung der solaren Energieumsetzung zur Folge hat.

Ein Nachteil von fix eingesetzten Wärmeleitblechen liegt in den unterschiedlichen Ausdehnungskoeffizienten der einzelnen Materialien (Glas, verschiedene Metalle, etc.), so dass sich Abstände zwischen Wärmeleitblechen und Rohren etc. ausbilden, die zu den genannten ungewünschten Effekten führen.

Somit ergibt sich ein weiterer Vorteil des Einsatzes des Wärmeleitblechs 9 darin, dass durch die thermisch bedingte relative Bewegung des Wärmeleitbleches 9 gegenüber den angrenzenden Flächen eine willkommene Reinigung zum Beispiel der Glasfläche des Innenrohres 6 und der Leitblechfläche gewährleistet ist. Dies ist bei im Bereich 10 befestigten Wärmeleitblech 9 richtig; das Wärmeleitblech 9 kann aber auch schwimmend eingesetzt werden, so dass es sich über die Federkraft sowohl am Innenrohr 6 als auch am Rohr 8 abstützt. Das Volumen 19 zwischen Innenrohr 6 und Rohr 8 kann beispielsweise mit Umgebungsluft oder einem Schutzgas gefüllt sein oder unter Unterdruck stehen.

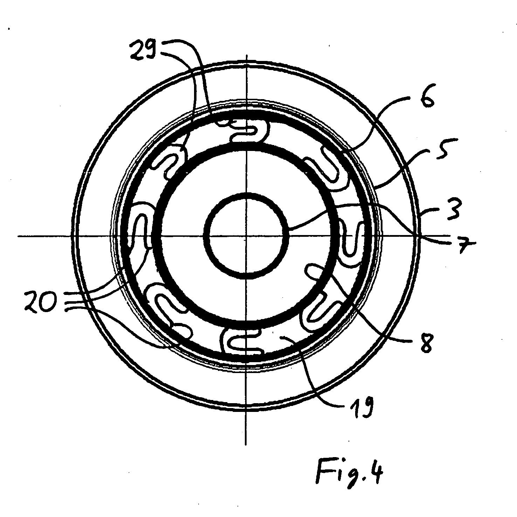

Die Fig. 4 zeigt einen Querschnitt durch einen nicht erfindungsgemäβen Wärmetauscher. Gleiche Merkmale sind in den Figuren mit den jeweils gleichen Bezugszeichen gekennzeichnet. Der Wärmetauscher umfasst auch hier eine Vakuumröhre, die aus zwei ineinander geschobenen Glasröhren 3 und 6 besteht. Die Absorberschicht 5 ist auf der Aussenseite aufgetragen, aber es bestehen die gleichen Möglichkeiten wie bei dem Ausführungsbeispiel nach der Fig. 1.

Das Wärmeleitblech 29 besteht bei diesem Ausführungsbeispiel aus einer Vielzahl von rechteckigen Blechen, hier acht Bleche 29, die zwei freie Enden 20 und somit eine C-Form aufweisen. das vorzugsweise im Bereich 10 auf dem Rohr 8 befestigt ist. Jedes Blech 29 wird unter Vorspannung zwischen die Rohre 6 und 8 eingesetzt, um den Zwischenraum 19 zu füllen. Durch die Vorspannung jedes Bleches 29 drückt dieses gegen die Innenwand des Rohrs 6 und liegt über einen gewissen Bereich auf dieser Innenwand auf. Dargestellt ist hier ein Bereich von jeweils 22,5 Grad. Diese Bereiche können kleiner aber auch grösser gewählt werden. Sie hängen auch von der Anzahl der verwendeten Bleche ab. Vorteilhafterweise wird aber auch hier die vollständige Innenseite des Rohrs 6 abgedeckt. Wenn N Wärmeleitfolien 29 vorgesehen sind, wobei N>=8, dann können deren freien Enden 20 insbesondere über einen Winkelbereich nahe 360/N Grad auf den besagten Wänden 6, 8 unter Vorspannung anliegen.

Die im Querschnitt C-förmigen Wärmeleitbleche 29 werden durch eigene Federkraft flächendeckend und fest auf die ganze Glasfläche des Rohres 6 gedrückt, so dass eine optimale Wärmeübertraggung erreicht wird.

Jedes Wärmeleitblech 29 kann an einer Seite, beispielsweise auf dem inneren Rohr 8, aber alternativ oder zusätzlich auch auf der Innenwand des Rohres 6 befestigt sein, so dass durch die thermisch bedingte relative Bewegung der Rohre 6 und 8 und der Wärmeleitbleche 29 zueinander, ein freies Ende oder beide freien Enden 20 sich gegenüber den angrenzenden Flächen bewegen.

In einem in den Zeichnungen nicht dargestellten Ausführungsbeispiel sind zwei spiralförmige Wärmeleitfolien 9 vorgesehen, die in einem voneinander beabstandeten Winkelbereich von 180 Grad auf der Aussenwand des fluidführenden Rohrsystems 8 über einen Winkelbereich 10 befestigt sind, insbesondere jeweils über einen Winkelbereich von nahezu 180 Grad. Dadurch ergeben sich zwei ineinander laufenden Spiralen, wobei der Wärmeübertrag durch die zwei Auflageflächen und den doppelten Leitungsquerschnitt für die Wärmeleitung verbessert wird. Es können in dieser Art und Weise auch drei spiralförmige Wärmeleitfolien 9 über jeweils nahezu 120 Grad vorgesehen werden. Bei vier spiralförmige Wärmeleitfolien 9 sind diese in einem Winkelabstand von beispielsweise 90 Grad an dem inneren Rohr 8 befestigt. Die Länge des freien Endes jeder Wärmeleitfolien 9 ist beispielsweise derart, dass sie sich über beispielsweise einen Winkelbereich von 540 Grad bis 720 Grad erstrecken, wobei das freie Ende auf der Innenseite des Rohres 6 oder einer benachbarten Wärmeleitfolie 9 anliegt.

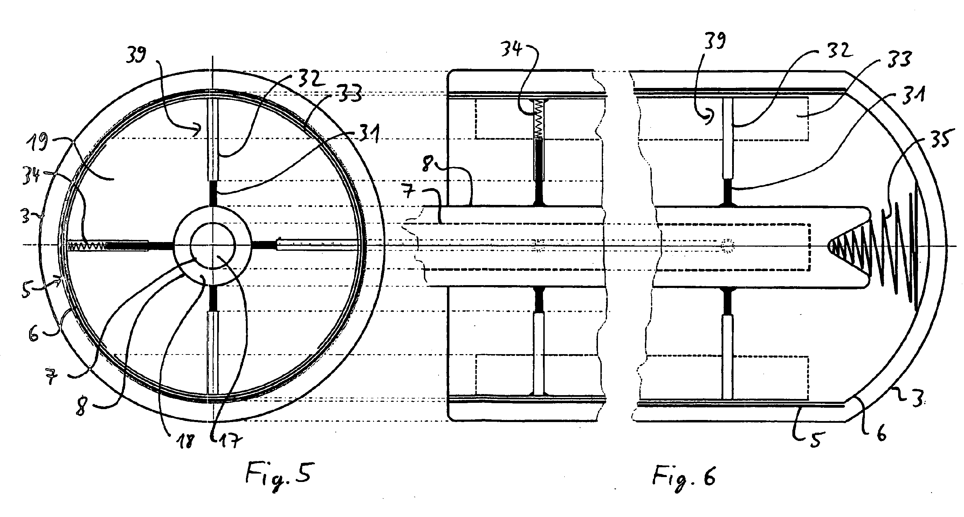

Die Fig. 5 zeigt einen Querschnitt durch einen weiteren, nicht erfindungsgemäβen Wärmetauscher und Fig. 6 einen Längsschnitt entlang der Linie VI-VI in der Fig. 5. Der Wärmetauscher umfasst auch hier eine Vakuumröhre, die aus zwei ineinander geschobenen Glasröhren 3 und 6 besteht. Die Absorberschicht 5 ist auf der Aussenseite der Glasröhre 6 aufgetragen. In dem Volumen 19 zwischen Innenrohr 6 und Rohr 8 kann beispielsweise mit Umgebungsluft oder einem Schutzgas gefüllt sein oder unter Unterdruck stehen. Die Wärmeleitelemente 39 dieses Ausführungsbeispiels bestehen aus jeweils mindestens einem wärmeleitenden Metallstab 31, beispielsweise aus Kupfer, der auf der Aussenseite des Rücklaufrohrs 8 angelötet oder sonstwie verbunden ist. In der Fig. 6 ist zu erkennen, dass zu einem Wärmeleitelement 39 jeweils zwei in einem Abstand voneinander auf einer parallel zur Hauptachse des Wärmetauschers verlaufenden Linie des Rohrmantels angeordneten Metallstäbe 31 gehören. Auf diese vorzugsweise aus Vollmaterial bestehenden Metallstäbe 31 ist jeweils eine hohle Hülse 32 aufgesetzt, die vorzugsweise aus demselben Material besteht oder den gleichen Wärmeausdehnungskoeffizienten aufweist. Die Hülsen 32 sind an ihren dem Stab 31 jeweils gegenüberliegenden Ende an einem Wärmeleitblech 33 befestigt, beispielsweise angelötet. Das Wärmeleitblech 33 liegt im zusammengebauten Zustand des Wärmetauschers an der Innenwand des Rohrs 6 an; vorteilhafterweise ist das Wärmeleitblech 33 nicht vorgebogen, so dass es federnd gegen die Wand 6 drückt. Diese Federwirkung wird von den hier zwei Hülsen 32 dadurch übermtittelt, dass in jeder Hülse 33 ein Federelement 34, beispielsweise eine Druckfeder, angeordnet ist, die sich einerseits auf dem Wärmeleitblech 33 abstützt und andererseits gegen die Spitze des Stabes 31 drückt. Dadurch wird das Wärmeleitblech 33 sicher in engem Kontakt mit der Wand 6 gehalten, wobei über die durch die federnden Stab 31 - Hülse 32 Verbindung ein gute Wärmeleitung in das Rohr 8 gewährleistet ist.

Im dargestellten Ausführungsbeispiel sind nun in einem Winkelabstand von 90 Grad um die Hauptachse des Wärmetauschers an zwei Orten entlang der besagten Längsachse jeweils vier Stäbe 31 an dem Rohr 8 befestigt. Es sind dann vier Wärmeleitbleche 33 vorgesehen an denen an entsprechenden Orten die Hülsen 32 befestigt sind. Die Ausmasse der Wärmeleitbleche 33 sind dergestalt, dass sie nach dem Einsetzen in das Rohr 6 fast an den kompletten Innenmantel des Rohres 6 anschmiegen; mit anderen Worten die vier Wärmeleitbleche 33 nehmen einen Winkelbereich von etwas weniger als 90 Grad (=360/4 Grad) ein. Zum Zusammenbau werden jeweils die Federn 34 in die Hülsen gesteckt, die Einheit aus Hülse 32 und Wärmeleitblech 33 auf gesteckt und eingedrückt, so dass in Richtung der Längsachse das Rohr 6 über die Wärmeleitbleche 33 geschoben werden kann. Vorzugweise werden dabei die Innenrohre 7 und 8 über eine longitudinale konische Feder 35 gehalten, die sich am längsseitigen Ende des Rohres 6 und in einer entsprechenden endseitigen Einbuchtung im Rohr 8 abstützt.

Im dargestellten Ausführungsbeispiel sind die zugehörigen Stäbe 31 jeweils in gleicher longitudinaler Position entlang dem Rohrsystem 8 angeordnet. In anderen Ausführungsbeispielen können diese Stäbe 31 auch in unterschiedlichen longitudinaler Abständen voneinander vorgesehen sein.

Die Stäbe 31 können auch an dem Wärmeleitblech 33 und die Hülsen 32 an dem Rohrsystem 8 befestigt sein.

Anstelle von zwei mal vier Befestigungspunkten 31, 32, 34 und zugehörigen vier Wärmeleitblechen 33, können auch drei oder vier mal vier Befestigungspunkte vorgesehen sein. Andererseits können auch nur zwei oder drei Wärmeleitbleche 33 vorgesehen sein, jeweils mit zwei, drei oder mehr Befestigungspunkten. Mehr als vier Wärmeleitbleche 33 sind zum Zwecke der Wärmeleitung oder Stabilität des Wärmetauschers im Allgemeinen nicht erforderlich.

In einem in den Zeichnungen nicht dargestellten Ausführungsbeispiel kann jede einzelne Stab 31 - Hülse 32 - Verbindung mit eingesetztem Federelement 34 auch durch jeweils ein einziges Federelement ersetzt sein, welches einerseits an dem Rohr 8 und andererseits an dem Wärmeleitblech 33 befestigt ist. Dieses Federelement nimmt dann die Funktion aller drei Elemente eines Befestigungspunktes 31, 32, 34 wahr. Die Vormontage ist heir lediglich aufwendiger als beim ind en Fig. 5 und 6 dargestellten Ausführungsbeispiel, da hier beim Zusammenbau zuerst die Federelemente befestigt werden müssen, ohne dass diese ihre Elastizität verlieren.

Die Rohre 3 und 6 bestehen aus Glas. Die Innenrohre 7 und 8 können aus Metall, insbesondere Kupfer, Messing, Aluminium oder Inox bestehen, wobei die Reihenfolge die technisch vorteilhafteste Reihenfolge angibt. Es werden für diese Rohre 7, 8 vorzugsweise gut wärmeleitende Metalle gewählt. Das Wärmeleitblech 9 oder 29 besteht aus einem gut wärmeleitenden Material, insbesondere aus einem Metall wie Kupfer, Messing, Aluminium oder geeignete Inoxsorten oder weichem Titanblech.

### Bezugszeichenliste:

- 3: Glasröhre
- 4: Spalt
- 5: Absorberschicht
- 6: Glasröhre
- 7: Vorlaufrohr
- 8: Rücklaufrohr
- 9: Wärmeleitblech
- 10: Winkelbereich
- 11: Verteilerrahmen
- 13: Kollektorausgang
- 14: Sammlergehäuse
- 15: Trägerrahmen
- 17: Fluid-Volumen
- 18: Fluid-Volumen
- 19: Zwischenraum
- 20: freies Ende
- 29: Wärmeleitblech
- 31: Metallstab
- 32: Hülse
- 33: Wärmeleitblech
- 34: Federelement
- 35: konische Feder
- 39: Wärmeleitelement

## Patentansprüche

1. Wärmetauscher mit einer Vakuumröhre (4) mit einer Aussenwand (3; 6) aus Glas, mit einer Fluid (17, 18) aufnehmenden Innenröhre (7, 8), wobei mindestens ein Wärmeleitelement (9) die besagte Aussenwand (6) der Vakuumröhre (4) mit dem fluidführenden Rohrsystem (8) verbindet, wobei an der besagten Wand (6) auf der dem Wärmeleitelement (9) abgewandten Seite der Vakuumröhre (4) ein Solarenergie sammelndes und konzentrierendes Mittel (5) vorgesehen ist, wobei jedes Wärmeleitelement jeweils unter Vorspannung gegen die besagte Wand (6) der Vakuumröhre (4) und gegen das fluidführende Rohrsystem (8) drückt, wobei sowohl die Wärmeleitelemente (9) als auch das fluidführende Rohrsystem (8) aus Metall bestehen, **dadurch gekennzeichnet, dass** jedes Wärmeleitelement (9) an dem fluidführenden Rohrsystem (8) befestigt ist, im Querschnitt spiralförmig verläuft und dabei einen Winkel, in Längsrichtung des Wärmetauschers gesehen, von mindestens 450 Grad abdeckt, wobei das unter Vorspannung stehende Wärmeleitelement (9) die Aussenwand (8) der Fluid aufnehmenden Innenröhre konzentrisch zu der besagten Wand (6) der Vakuumröhre (4) hält.

2. Wärmetauscher nach Anspruch 1, **dadurch gekennzeichnet, dass** jedes Wärmeleitelement (9) in Längsrichtung des Wärmetauschers gesehen mehr als 720 Grad abdeckt.

3. Wärmetauscher nach Anspruch 2, **dadurch gekennzeichnet, dass** ein oder zwei Wärmeleitelemente (9) in einem voneinander beabstandeten Winkelbereich (10) auf der Aussenwand des fluidführenden Rohrsystems (8) anliegen, insbesondere über einen Winkelbereich zwischen 350 bis 359 Grad beziehungsweise zwischen 90 und 179 Grad.

4. Wärmetauscher nach einem der Ansprüche 1 bis 3, **dadurch gekennzeichnet, dass** das fluidführende Rohrsystem (8) ein äusseres Volumen (18) und ein inneres Volumen (17) umfasst, die insbesondere im Gegenstrombetrieb betreibbar sind.

5. Wärmetauscher nach einem der Ansprüche 1 bis 4, **dadurch gekennzeichnet, dass** mindestens ein Wärmeleitelement (9) mit der Aussenwand des fluidführenden Rohrsystems (8) verlötet ist.

6. Wärmetauscher nach einem der Ansprüche 1 bis 5, **dadurch gekennzeichnet, dass** das Volumen (19) zwischen der besagten Wand (6) der Vakuumröhre (4) und der Aussenwand des fluidführenden Rohrsystems (8) unter Unterdruck steht.

## Claims

1. A heat exchanger having a vacuum tube (4) with an outer wall (3; 6) made of glass and having a fluid-conducting pipe system (8) which holds a fluid (17, 18), wherein at least one heat-conducting element (9) connects said outer wall (6) of the vacuum tube (4) with the fluid-conducting pipe system (8), wherein a means (5) which collects and concentrates solar energy is provided on said wall (6) of the vacuum tube (4), on the side of the vacuum tube facing away from the heat-conducting element (9), wherein each heat-conducting element (9) presses with prestress against said wall (6) of the vacuum tube (4) and against the fluid-conducting pipe system (8), wherein the heat-conducting elements (9) as well as the fluid-conducting pipe system (8) are made of metal, **characterized in that** each heat-conducting element (9) is attached to the fluid-conducting pipe system (8), extends in a spiral shape in cross section and covers an angle of at least 450 degrees, in the longitudinal direction of the heat exchanger, wherein the heat-conducting element (9) under prestress (9) holds the outer wall (8) of the fluid-conducting inner wall concentrically to said wall (6) of the vacuum tube (4).

2. The heat exchanger as claimed in claim 1, **characterized in that** each heat-conducting element (9) covers an angle of more than 720 degrees, in the longitudinal direction of the heat exchanger.

3. The heat exchanger as claimed in claim 2, **characterized in that** one or two heat-conducting elements (9) bear spaced apart from one another in an angular range (10) on the outer wall of the fluid-conducting pipe system (8), over an angular range between 350 and 359 degrees or between 90 and 179 degrees, respectively.

4. The heat exchanger as claimed in one of claims 1 to 3, **characterized in that** the fluid-conducting pipe system comprises an outer fluid volume (18) and an inner volume (17), wherein the fluid contained in the outer volume and the inner fluid volume can be operated in the counter-current mode.

5. The heat exchanger as claimed in one of claims 1 to 4, **characterized in that** at least one heat-conducting element (9) is hard-soldered at the outer wall of the fluid-conducting pipe system (8).

6. The heat exchanger as claimed in one of claims 1 to 5, **characterized in that** the volume (19) between said wall (6) of the vacuum tube (4) and the outer wall of said fluid-conducting pipe system (8) are under depression.

## Revendications

1. Echangeur thermique comprenant un tube à vide (4) avec une paroi extérieure (3; 6) en verre, avec un tube intérieur (7,8) recevant un fluide (17, 18), où au moins un élément de guidage de chaleur (9) connecte ladite paroi extérieure (6) du tube à vide (4) avec le système de conduits convoyant le fluide, où il est prévu, à ladite paroi (6) sur le coté opposé de l'élément de guidage de chaleur (9) du tube à vide (4), un moyen (5) rassemblant et concentrant de l'énergie solaire, où chaque élément de guidage de chaleur pousse avec une prétension contre ladite paroi (6) du tube à vide (4) et contre le système de conduits (8) convoyant le fluide, où aussi bien les éléments de guidage de chaleur (9) que le système de conduits (8) convoyant le fluide sont en métal, **caractérisé en ce que** chaque élément de guidage de chaleur (9) est attaché au système de conduits (8) convoyant le fluide, s'étend en spirale et couvre ainsi un angle, vu dans la direction longitudinale du échangeur thermique, d'au moins 450 degrés, où l'élément de guidage de chaleur (9) étant sous prétension tient la paroi extérieure (8) du tube intérieure recevant le fluide d'une manière concentrique par rapport à ladite paroi (6) du tube à vide (4).

2. Echangeur thermique selon la revendication 1, **caractérisé en ce que** chaque élément de guidage de chaleur (9) couvre dans la direction longitudinale de l'échangeur de thermique plus que 720 degrés.

3. Echangeur thermique selon la revendication 2, **caractérisé en ce qu'**un ou deux éléments de guidage de chaleur (9) s'appliquent dans des portions d'angle (10) espacées sur la paroi extérieure du système de conduits convoyant le fluide (8), en particulier pour une portion d'angle entre 350 and 359 degrés ou entre 90 et 179 degrés, respectivement.

4. Echangeur thermique selon l'une des revendications 1 à 3, **caractérisé en ce que** le système de conduits convoyant le fluide (8) comprend un volume extérieur (18) et un volume intérieur (17), qui peuvent être exploités en contre-courant.

5. Echangeur thermique selon l'une des revendications 1 à 4, **caractérisé en ce qu'**au moins un élément de guidage de chaleur (9) est soudé avec le système de conduits convoyant le fluide (8).

6. Echangeur thermique selon l'une des revendications 1 à 5, **caractérisé en ce que** le volume (19) entre ladite paroi (6) du tube à vide (4) et la paroi extérieure du système de conduits convoyant le fluide (8) est maintenu en dépression.
